# EUROPEAN PATENT SPECIFICATION

(11) **EP 2 149 193 B1**
(45) Date of publication and mention of the grant of the patent: **21.09.2011**
(21) Application number: 08767703.5
(22) Date of filing: 15.05.2008
(51) Int. Cl.: H02K 15/00, H02K 3/30, H02K 3/34, B29B 17/02

(54) **PROCESS FOR REFURBISHING AN ELECTRICAL MOTOR OR GENERATOR COMPRISING A LAMINATE ELECTRICAL INSULATION PART AND ELECTRICAL MOTOR OR GENERATOR COMPRISING SAID PART**
VERFAHREN ZUR ÜBERHOLUNG EINES ELEKTRISCHEN MOTORS ODER GENERATORS MIT EINEM BESCHICHTETEN TEIL ZUR ELEKTRISCHEN ISOLATION SOWIE ELEKTRISCHER MOTOR ODER GENERATOR MIT EINEM SOLCHEN TEIL
PROCÉDÉ DE REMISE EN ÉTAT D'UN MOTEUR OU GÉNÉRATEUR ÉLECTRIQUE COMPRENANT UNE PARTIE D'ISOLATION ÉLECTRIQUE STRATIFIÉE, ET MOTEUR OU GÉNÉRATEUR ÉLECTRIQUE COMPRENANT LADITE PARTIE

(30) Priority: 18.05.2007 US 804527
(43) Date of publication of application: 03.02.2010
(73) Proprietor: E. I. Du Pont de Nemours and Company, Wilmington, DE 19898 (US)
(72) Inventor: LEVIT, Mikhail, R., Glen Allen, Virginia 23059 (US); WICKS, Roger, Curtis, Colonial Heights, Virginia 23834 (US)
(74) Representative: Gritschneder, Martin
(86) International application number: PCT/US2008/006223
(87) International publication number: WO 2008/143927

(56) References cited:
- EP-A- 0 059 866
- EP-A- 0 872 321
- US-A- 3 250 643
- US-A- 3 633 891
- US-A- 5 099 159
- US-A- 5 099 159
- US-B1- 6 242 825

## Description

### BACKGROUND OF INVENTION

### Field of Invention.

This invention relates to an improved process for removing conductors and electrical insulation parts from electrical Motors or generators so that these devices can be refurbished with new insulation and conductors. The electrical motor or generator has an electrical winding support, a laminate electrical insulation part, an electrical conductor, and an encapsulating resin, that has a special laminate electrical insulation part that allows more efficient and environmentally friendly refurbishing.

### Description of the Related Art.

EP 0 872 321 A2 discloses a method of processing discarded electric motors to recover high purity copper and iron quickly and at low cost by facilitating separation of copper parts and iron parts in the discarded motors. In a first step of the method a heat treatment is applied to a discarded motor to soften or bum-off a resin coating fixed to copper windings wound on a stator core of the motor. Next the stator core is severed transversely through copper windings in a plane substantially at right angles to a longitudinal rotation shaft of the motor. Finally, the copper windings are separated from the iron stator core.

EP 0 059 966 A2 discloses a thin insulating sheet for insulation of an electric coil, the sheet having excellent electric characteristics, heat resistance and impregnation. The sheet comprises 1 to 9wt.% of a polymer fibril which is melt bonded to a polymer film or a porous polymer sheet and impregnated with a resin in a prepreg form.

US 6242825 B1 discloses an electric rotating machine which is compact and of reduced cost by improving the thermal conductivity of the main insulation in the thickness direction while maintaining the insulation breakdown voltage of the main insulation high. The main insulation comprises a laminated layer with a first and a second insulating layer. The first insulation layer is formed by bonding a flake shaped insulating material, such as mica, with a thermosetting resin. The second insulation layer contains a fiber cloth, such as glass fiber, or a plastic film, such as a polyimid film, and is necessary to strengthen the insulating material layer. The initial breakdown voltage in the thickness direction of the main insulator of the stator winding is higher than 20 kV/mm, and the thermal conductivity in the thickness direction is within a range of 0.35 to 1 W/m.K. The amount of resin is within a range of 20 to 50 weight % of the main insulation material.

An important part of the electrical industry is the process of refurbishing electrical devices such as motors and generators, during which old, defective, or failing wiring is removed from an electrical device component, such as a stator or rotor, and new wiring is put in place, tested and certified for continuing service.

For example if the electrical device component is a stator, the wiring is typically wound around the stator in insulated slots on the stator. The combination of wound wiring and various types of electrical insulation parts, such as slot liners, covering liners, wedges, etc are used to physically fill as much of the slot as possible so as to mechanically bind the wiring to the stator.

The assembled stator comprising the wound wiring and electrical insulation parts is then impregnated with a thermoset varnish or matrix resin to fill as much of the open space in the slots as possible to reduce dielectric breakdown due to air voids. This creates a solid mass of material on the stator that will not melt and cannot be easily removed with solvents. Therefore before removing any of the wiring frown the stator a refurbisher must thermally decompose, i.e., burn off, all of the organic components, including the varnish and/or matrix resin, and electrical insulation.

The Electrical Apparatus Service Association (EASA) in its Tech Note No 16-999 specifies this process to be conducted in an oven at a temperature of up to 360 °C in the case of an organic core plate and up to 400 °C in the case of inorganic core plate. Also, this Tech Note emphasizes that any overheating of some electrical device components is very bad for the future performance of repaired motor. United States Patent No. 3,250,643 to Sergent also discloses the problems caused by overheating. The process of burning these electrical device components usually requires up to 8 hours and generates significant quantities of potentially hazardous off gases, in addition to consuming energy that can be very costly. Plus overheating can occur because the slot is filled completely and it is almost impossible to have uniform heat and mass exchange processes during burning. Therefore, any improvement in the method that either requires less burn time, consumes less energy, generates less off gas, or reduces the potential that a part will experience excessive heat is desired

### SUMMARY OF THE INVENTION

This invention relates to a process for refurbishing an electrical motor or generator according to claim 1. Further embodiments of the invention are defined in the dependent claims.

### DESCRIPTION OF THE DRAWINGS

Figures 1 and 2 are representations of insulated slots in an electrical device.
Figure 3 is a representation of an electrical device known as a stator.
Figure 4 is a representation of a stator showing the insulation parts and conductors with the stator.
Figure 5 is a graph of the effect of temperature on delaminaton peel strength for one example laminate electrical insulation part.

### DETAILED DESCRIPTION OF THE DRAWINGS

According to claim 1 this invention relates to an improved process for removing conductors and electrical insulation parts from electrical motors and generators, in the following also referred to as electrical device components, so that these devices can be refurbished with new insulation and conductors.

Specifically, this invention relates to a process for refurbishing an electrical device component having an electrical winding support, a laminate electrical insulation part, an electrical conductor, and an encapsulating resin, comprising the steps of:
a) heating the device component to soften the laminate electrical insulation part such that the part will delaminate when a stress is applied;
b) applying a stress to the heated laminate electrical insulation part by pulling or stripping the electrical conductor from the device component, thereby delaminating the electrical insulation part and removing the electrical conductor along with a portion of the electrical insulation part; and
c) further heating the device component to thermally decompose both the encapsulating resin and the remaining electrical insulation part material present on the electrical winding support.

The key to this new process is the realization that if the electrical insulation parts in the electrical device component assembly, such as slot liners and wedges, are made from laminate material comprising a film and nonwoven sheets, in which at least from one side the film is thermally bonded to the nonwoven having a thermoplastic material that softens when heated, the electrical device components will only require heating up to some softening point of the thermoplastic material to weaken the structure and allow the electrical conductor winding to be removed from the slots.

Therefore the first process step is heating the device component to soften the laminate electrical insulation part such that the part will delaminate when a stress is applied. In one preferred embodiment, this is accomplished without any melt flow of the thermoplastic.

The second process step is to apply a stress to the laminate electrical insulation part by pulling or stripping the electrical conductor from the device component, thereby delaminating the electrical insulation part and removing the electrical conductor along with a portion of the electrical insulation part. In so doing, in many cases essentially half the electrical insulation is also removed with the windings. The stress can be applied in any fashion desired as long as adequate force is applied on the electrical conductor or wiring to delaminate the electrical insulation.

After the electrical device component (stator, for example) is heated to some medium range temperature to weaken the thermoplastic, and the windings and some of the insulation parts have been removed, the electrical device component is further heated to burn off the rest of the organic material. That is, the device component is further heated to thermally decompose both the encapsulating resin and the remaining electrical insulation part material present on the electrical winding support. Because of the prior removal of a large quantity of the electrical insulation and matrix resin and/or varnish, the amount of residual organic material on electrical device component is much smaller and easier to decompose because the slots are now open. Since a smaller quantity of material must be removed, the quantity of associated off gas is also reduced. In addition, the likelihood of damaging the electrical device component by overheating is also reduced because the removal of the windings and a portion of the electrical insulation from the slot partially opens the slot, allowing better heat and mass transfer between the hot air in the oven and residue materials in the slot. As a result, a much more efficient and more environmentally friendly process of the repair can be accomplished.

In a preferred embodiment, in the first process step it is enough to soften the polymer in the laminate electrical insulation by heating the electrical device component to a temperature of about 50 °C to 70 °C below the melting point of the lower melting point polymer in the insulation. At this level of temperature, the bond strength between the nonwoven sheet and the film becomes very weak, generally only about 10 to 15 % of the original bond or delaminaton peel strength at room temperature, and pulling the conductors or wiring out of the slots can be accomplished. In another preferred embodiment the heating is not accompanied with any flow of the polymer. If the any of the laminate parts or film is actually melted the flow of polymer could create complications, such as a large quantity of molten polymer that would become tacky and would be difficult to remove.

The electrical device component comprises an electrical winding support, a laminate electrical insulation part, an electrical conductor, and an encapsulating resin. By electrical winding support, it is meant a portion of a motor or generator that is especially designed to receive wound wires or conductors. In one embodiment, the electrical winding support is provided with slots or other areas especially shaped to receive the wound windings. Generally such electrical winding supports are made from metal; typical electrical winding supports include rotors and stators.

Both rotors and stators can have slots that are filled with the electrical conductors in the form of coils or wiring. The conductors in the slots are insulated from the metal of the rotor or stator with laminate electrical insulation parts (such as slot liners) and are protected and fixed from the top of the slot with slot closures, wedges and sticks.

By laminate electrical insulation part, it is meant electrical insulation made by the lamination of at least one film and at least one fibrous sheet containing thermoplastic material; the film is attached to the fibrous sheet by thermal bonding of a thermoplastic polymer that is either one of the components of the nonwoven sheet or on the surface of the film. This thermoplastic polymer has a melting point at least 15 degrees Celsius lower than both the melting point of any other polymer component in the fibrous sheet and the melting point of the thermoplastic film. The thermoplastic polymer used to the thermally bond the film and the fibrous sheet can be initially in the structure of the fibrous sheet or on the surface of the thermoplastic film.

By fibrous sheet is meant any woven, knitted, or nonwoven structure. By "woven" is meant any fabric made by weaving yams; that is, interlacing or interweaving at least two yarns typically at right angles. Generally such fabrics are made by interlacing one set of yarns, called warp yarns, with another set of yarns, called weft or fill yarns. The woven fabric can have essentially any weave, such as, plain weave, crowfoot weave, basket weave, satin weave, twill weave, unbalanced weaves, and the like. Plain weave is the most common. By "knitted" is meant a structure producible by interlocking a series of loops of one or more yarns by means of needles or wires, such as warp knits (e.g., tricot, milanese, or raschel) and weft knits (e.g., circular or flat).

In one preferred embodiment the fibrous sheet is nonwoven. By "nonwoven" is meant a network of fibers forming a flexible sheet material producible without weaving or knitting and held together by either (i) mechanical interlocking of at least some of the fibers, (ii) fusing at least some parts of some of the fibers, or (iii) bonding at least some of the fibers by use of a binder material. Non-woven includes unidirectional fabrics, felts, spunlaced fabrics, hydrolaced fabrics, spunbonded fabrics, melt-blown fabrics and the like. The nonwoven can be made by conventional nonwoven sheet forming processes, including processes for making air-laid nonwovens, wet-laid nonwovens, or nonwovens made from carding equipment; and such formed sheets can be consolidated into fabrics via spunlacing, hydrolacing, needlepunching, or other processes which can generate a nonwoven sheet. The spunlaced processes disclosed in US Pat. No. US 3,508,308 and US 3, 797,074; and the needlepunching processes disclosed in US 2,910,763 and US 3,684,284 are examples of conventional methods well known in the art that are useful in the manufacture of the nonwoven fabrics and felt.

In some preferred embodiments, the laminate electrical insulation part uses nonwoven sheets made from multicomponent fibers. By multicomponent fibers it is meant the fiber is comprised of more than one polymer. In one preferred embodiment the fiber is bicomponent, meaning it is melt spun with two thermoplastic polymers in either a sheath-core arrangement or a side-by-side arrangement. The phrase "more than one polymer" is meant to include not only polymers having different chemical structures, but polymers having similar structures but having different melting points. For example, one preferred embodiment is a nonwoven sheet made from sheath/core fibers wherein the sheath is a polyester copolymer or terpolymer and the core is a polyester homopolymer. Any combination of polymers may be used as long as one of the polymers in the multicomponent fiber has a melting point at least 15 degrees Celsius lower than both one of the other polymer(s) in the fiber and the melting point of the film. Further, in one embodiment the polymers can be arranged in the multicomponent fiber in any manner as long as the lower melting point polymer is present at a surface of the fiber. In a preferred embodiment the lower melting point polymer forms the sheath of a sheath/core fiber and the higher melting point polymer forms the core.

Any nonwoven process that forms a nonwoven sheet having multicomponent fibers can be used, including processes that form the sheet solely from multicomponent fibers in staple form. Such staple fiber nonwovens can be prepared by a number of methods known in the art, including carding or garneting, air-laying, or wet-laying of fibers. The staple fibers preferably have a denier per filament between about 0.5 and 6.0 and a fiber length of between about 0.6 cm and 10 cm.

In some embodiments the fibers in the nonwoven sheet are generally continuous filaments directly spun into the sheet without any intentional cutting of the filaments. In some preferred embodiments the nonwoven sheet is made from processes used to spin and consolidate continuous filament thermoplastic webs known in the art such as spunbonding or meltblowing. Multiple component spunbonded or meltblown webs suitable for preparing laminate parts can be prepared using methods known in the art, for example as described in United States Patent No 6,548,431 to Bansal et al. In one preferred embodiment, the multicomponent fibers are incorporated into a nonwoven sheet by melt spinning fibers from spinning beams having a large number of holes onto a moving horizontal belt as is disclosed in United States Patent No. 5,885,909 to Rudisill et al. In some embodiments the continuous filament webs suitable for preparing the nonwoven fabrics preferably comprise continuous filaments having a denier per filament between about 0.5 and 20, in some embodiments a preferred denier per filament range is about 1 and 5.

The preferred form of the nonwoven sheet used in the laminate is a lightly thermally-bonded sheet. Such lightly thermally-bonded sheet can be prepared, for example, by thermal bonding of the spun sheet in the nip between an embosser roll and an anvil roll using low nip pressure (100- 300 N/cm) and a temperature much below the melting point of low meltable polymer. Such technique is described in Bansal et al United States Patent Application 2005/0130545 to Bansal et al. The resulting sheet structure has enough mechanical integrity for subsequent processing while still retaining enough bulk and formability to be laminated with sufficient bond strength in the final product.

The multicomponent fibers of the nonwoven sheet can include combinations of different polyesters and co-polyesters, poly (phenylene sulfide) and polyester, and the like, as long as the difference between the lowest melting point fiber polymer and a higher melting point polymer in the fiber is at least 15 °C and the melting point of the lowest melting point polymer is at least 15 °C below melting point of the film. This allows the final nonwoven to contribute good tear properties to the final laminate structure. In some embodiments the difference between the melting points of the polymers is about 15 °C to 100 °C; in some other embodiments the difference between the melting points of the polymers is about 15 °C to 50 °C. In some embodiments, the low melting point polymer is present in each individual multicomponent filament in about 10 to 50 percent by weight. If less that 10 weight percent low melting point polymer is present in the multicomponent fiber, it is thought this is not a sufficient amount of polymer to fully and uniformly bond the nonwoven with the film. Amounts in excess of 50 weight percent are thought to adversely affect the tear properties of the final laminate structure and its ability to be impregnated with a varnish or matrix resin while inserted in the electrical device. Regardless of the actual percentage of the lower melting point polymer in the multicomponent fiber, in a preferred embodiment this lower melting point polymer is uniformly distributed along the axis of the multicomponent fiber, so that any fiber in the nonwoven sheet that is at the surface of the nonwoven sheet has lower melting point polymer available for bonding with the film.

While a single layer nonwoven structure is a preferred embodiment, a multi-layer nonwoven could be used as long as the layer of the multi-layer nonwoven that is in contact with the film is made from the multicomponent fibers as previously described. Basis weight and thickness of the nonwoven sheet is not critical and is dependent upon the end use of the final laminate. In some preferred embodiments the basis weight is 60 to 100 grams per square meter and the final thickness of the nonwoven sheets in the laminate structure is 75 to 125 micrometers. The polymeric components forming the multicomponent fibers can include conventional additives such as dyes, pigments, antioxidants, ultraviolet stabilizers, spin finishes, and the like.

The thermoplastic film can be made from polyester, polyamide, poly (phenylene sulfide) (PPS), and/or other thermoplastic materials. The thermoplastic film can be a homogeneous material or it can be layered structure with different thermoplastics in different layers. In some embodiments, the preferred polyesters include poly (ethylene terephthalate), poly (ethylene naphthalate), and liquid crystalline polyesters.

Poly (ethylene terephthalate) (PET) can include a variety of comonomers, including diethylene glycol, cyclohexanedimethanol, poly(ethylene glycol), glutaric acid, azelaic acid, sebacic acid, isophthalic acid, and the like. In addition to these comonomers, branching agents like trimesic acid, pyromellitic acid, trimethylolpropane and trimethyloloethane, and pentaerythritol may be used. The poly (ethylene terephthalate) can be obtained by known polymerization techniques from either terephthalic acid or its lower alkyl esters (e.g. dimethyl terephthalate) and ethylene glycol or blends or mixtures of these. Poly (ethylene napthalate) (PEN) can be obtained by known polymerization techniques from 2,6 napthalene dicarboxylic acid and ethylene glycol. Examples of commercially available PET and PEN films are MYLAR® and TEONEX® films respectively, sold by DuPont-Teijin Films.

By "liquid crystalline polyester" (LCP) herein is meant polyester that is anisotropic when tested using the TOT test or any reasonable variation thereof, as described in United States Patent No. 4,118,372. One preferred form of liquid crystalline polyesters is "all aromatic"; that is, all of the groups in the polymer main chain are aromatic (except for the linking groups such as ester groups), but side groups which are not aromatic may be present. Possible LCP compositions for films and film types are described, for example, in United States Patent No. 5,248,530 to Jester et al.. One commercially available example of PPS film is TORELINA® film sold by Toray Company.

Other materials, particularly those often found in or made for use in thermoplastic compositions may also be present in the film. These materials should preferably be chemically inert and reasonably thermally stable under the operating environment of the part in service. Such materials may include, for example, one or more of fillers, reinforcing agents, pigments, and nucleating agents. Other polymers may also be present, thus forming polymer blends. In some embodiments, the composition can contain about 1 to about 55 weight percent of fillers and/or reinforcing agents, more preferably about 5 to about 40 weight percent of these materials.

In one embodiment the thermoplastic film can also contain an internal layer of thermoset material. For example, KAPTON® EKJ film, sold by DuPont, has thermoplastic polyimide outside layers with a thermoset polyimide layer inside the structure.

The use in electrical insulation parts requires the thermoplastic film to be a true film, not simply a polymer coating or an extrusion on a nonwoven sheet that would not have adequate crystallinity and the corresponding stiffness and other mechanical properties plus thermal stability required by laminate electrical insulation parts. In some preferred embodiments the film is a bi-axially stretched film. Such film isn't required to have a preferred orientation and correspondingly has about the same stiffness in all directions plus no weak direction for tear. The melting point of the thermoplastic film should be on at least 15 degrees Celsius above melting point of the lowest meltable polymer in the system. This provides an adequate temperature difference during the thermal lamination process to create a good bond and will not cause any significant shrinkage or warpage of the film, or disturb its internal structure and corresponding physical and mechanical properties.

The thermoplastic film has an initial modulus of at least 0.8 Pa, which, along with thickness, provides necessary stiffness of the film. In one preferable embodiment, the initial modulus of the film is at least 2 GPa.

The thermoplastic film is positioned between, adjacent to, and attached to at least one fibrous sheet, and in a preferred embodiment two fibrous sheets, in the laminate electrical insulation part. This allows the laminate electrical insulation part to be impregnated with a matrix resin either prior to installation in an electrical device, or after installation in the device. The thermoplastic film is attached to the fibrous sheet only by the low melt point polymer in the system (laminate structure)

In one preferred embodiment, the fibrous sheet consists of multicomponent filaments wherein the lower melt point polymer is available on the surface of those filaments for bonding, with the application of heat, and optionally pressure, substantially all of the surface fibers in contact with the film can bond with the film, creating what is believed to be a superior and more uniform full thermal bond between the nonwoven sheets and the film while maintaining the nonwoven sheet tear resistance and impregnability. No adhesives and/or organic solvents are required.

In another preferred embodiment, if two fibrous sheets are attached to the film, they are attached to the same degree. This can be accomplished by using essentially identical fibrous sheets, such as nonwoven sheets, on either side of the film, and then applying similar heat and pressure to both sides. Alternatively, the nonwoven sheets can be attached to the film in differing degrees, however, in practice this creates the need to keep track of which side is higher bonded and in general is not as desired.

The thermal lamination process can be conducted in the batch or as a continuous process by applying optimum temperature and pressure to the contact surface between the nonwoven sheet and the film. Alternatively, if desired a batch process can be used, using a platen press or similar type device.

In the continuous process, calenders or double belt presses can be used. Heat can also be applied to the film and nonwoven sheets before applying pressure, or simultaneously with applying pressure, or the nonwoven sheets and/or film can be preheated prior to applying pressure and temperature.

If two fibrous sheets should be attached to then film, that can be accomplished in one step or in two steps; at first bonding from one side and after that, from the other side. The preferred type of the calender may be a soft nip calender, in which each nip is created by two rolls: one hard metal roll and one composite roll. Typical materials of the composite rolls include aliphatic and aromatic polyamides and cotton (depending on required temperature and hardness).

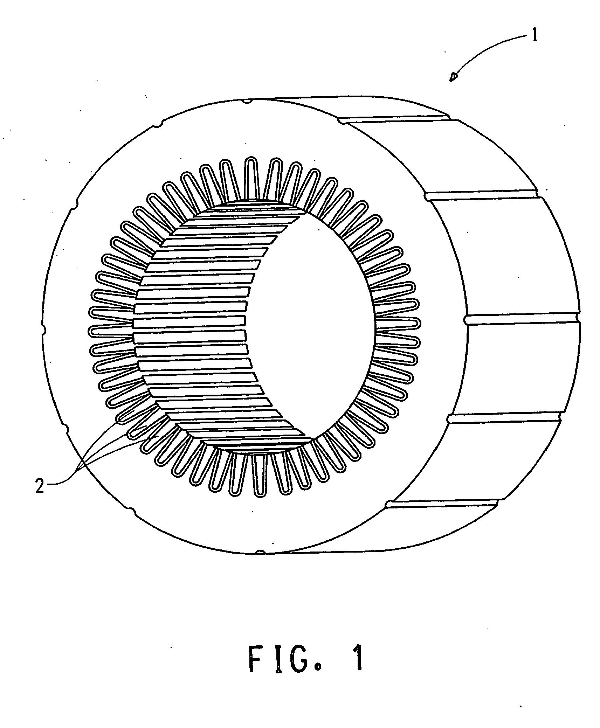

The laminate electrical insulation parts can be used in electrical devices in many different forms. These laminate electrical parts function as electrical insulation, aid for the wire insertion in the slots, fixture of the wiring in the slots, and mechanical protection of the wiring. Two of the most common electrical device components with slots are rotors and stators. Figure 1 is an illustration of one such device 1 having slots 2. If this electrical device component is stationary in the electrical device it is called a stator; if this electrical device component rotates it is called a rotor.

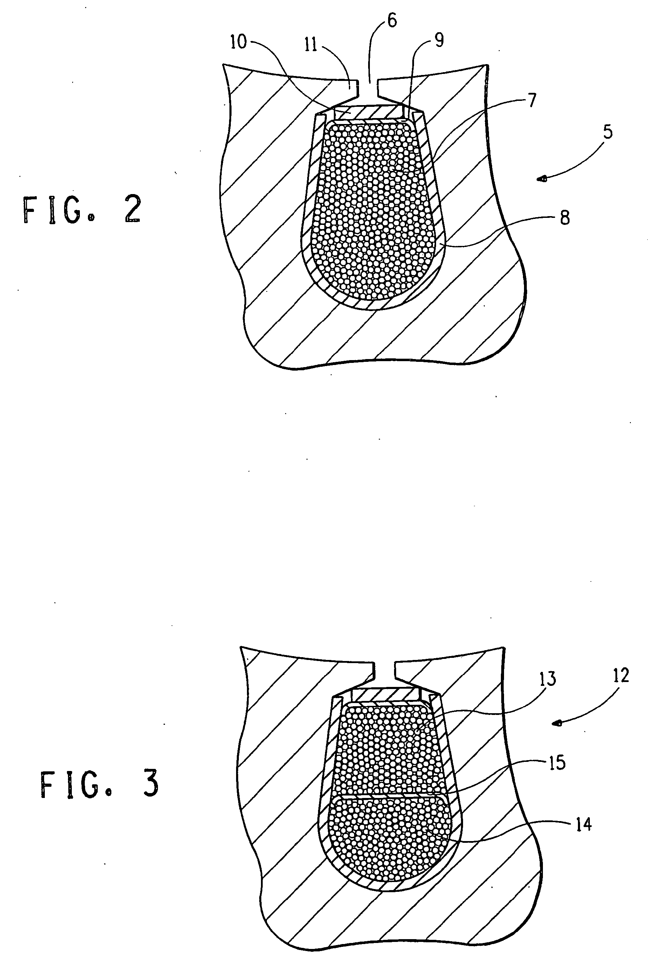

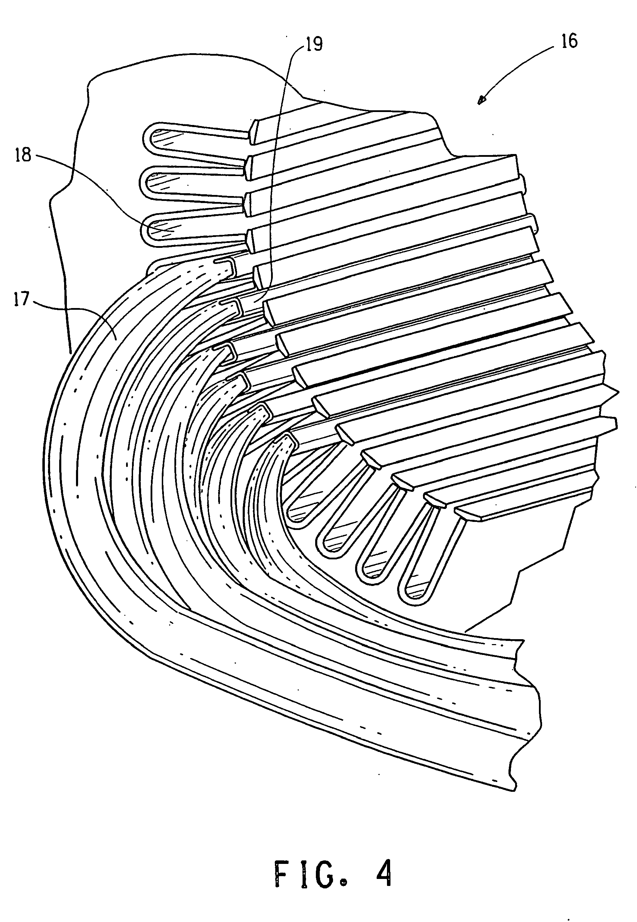

These parts can include slot liners, wedges and/or sticks, slot liner covers, and other parts that could be die-cut from a laminate. The parts can be used in any electrical device, however, in many embodiments they are useful in electric motors and electric generators Figures 2 and 3 disclose a typical embodiment of the laminate electrical insulation parts used in the slots of an electrical device. Figure 2 is an illustration of a single-layer winding 5 in a slot 6 having a plurality of winding wires 7 and a layer of electrical insulation in the slot called a slot liner 8. Slot liners is an electrical insulation part that is used to line rotor or stator slots and insulated the rotor or stator winding wires from the stator or rotor metal itself, or other structural parts. The open end of the slot is closed with another layer of electrical insulation known as a slot cover or covering 9 and the assembly is mechanically held in place with a wedge 10 (also known as a stick or a topstick) that engages the lip 11 of the slot. The wedge is used to compact and contain the coil wires within the slot. Figure 3 is an illustration of a two-layer winding 12 having two sets of winding wires 13 and 14 and another layer of insulation in the slot called a slot separator 15 (also known as a midstick or a center wedge) separating the two sets of wires. In this type of winding, the slot separator is used to separate and insulate the two windings from one another in the slot. Figure 4 is an illustration of an electrical device component 16 showing some of the winding wires 17 in the slots 18; also shown is a combination slot cover and wedge 19 covering the slots.

The laminate electrical insulation parts can be produced by known techniques. For example, slot closures can be produced from narrow strips of laminate that are cut to the required length and then formed into a channel-shaped cross-section by mean of a punch and die. Slot liners can be produced by bending the edge margins of a tape of the laminate inwardly to form cuffs at the edge of the tape and cutting the cuffed tape to size with a stamping die of appropriate size prior to bending transversely to the cuffed edges into a configuration suitable for insertion into the slots of the electrical device component.

The laminate electrical insulation parts have a breakdown voltage of at least 3 kilovolts. The breakdown voltage of the laminate parts is mostly dependent on the selection of the type of film and its thickness. These parts have a surface having a dynamic frictional coefficient of 0.25 or less. Low dynamic frictional performance is important for the safe (without damage) insertion of slot liners into slots, insertion of the wiring into the slots on the top of the slot liners, and insertion of slot covers, wedges, or sticks on the top of the filled slot. If the dynamic frictional coefficient is too high, then the laminate electrical insulation part will be abraded by either the slot or the wiring during manufacture, potentially compromising the performance of the electrical device. In some preferred embodiments, these laminate electrical insulation parts have a Normalized Bending Index of at least 30 because slot liners, and to a greater degree wedges and sticks, require stiffness to be inserted in the slot without any problems.

By electrical conductor, it is meant a plurality of wires preferably made from copper, aluminum, metal-coated fibers, or other acceptable wire-like forms that can conduct electricity- In a preferred embodiment the wires are uninsulated and are preferably present in the form of a bundle. The actual wire size is not critical and can be selected based on the type of motor. The laminate electrical insulation part can have, in addition, a matrix resin present in an amount of 10 to 50 percent by weight, based on the total weight of the electrical insulation part and the resin. Generally this is done to eliminate air from the part and provides improved thermal and dielectric properties to the insulation. In addition, there is some increase in stiffness to bend after such treatment The resin can be applied to the part, cured or partially cured, and then installed in the slot of the electrical device component; or the part can be installed in the electrical device component, wound with wiring, and then the wound electrical device component having the part can be dipped or otherwise provided with adequate resin to substantially fully impregnate the part with matrix resin and encapsulate the electrical device component if desired. Alternatively, the part can be partially impregnated with a resin, installed in the electrical device component, and then further impregnated in a later step with the same or different resin. Once impregnated the part or device can be thermally cured to crosslink and harden the matrix resin. Useful resins include epoxy, polyester, polyurethane, polyesterimide, and the like.

### Test Methods

Melting points were measured by ASTM Method D3418. Melting points are taken as the maximum of the melting endotherm and are measured on the second heat at a heating rate of 10°C/min.

The tensile properties of laminate structures of the present invention were measured on an Instron-type testing machine using test specimens 2.54 cm wide and a gage length of 18 cm, in accordance with ASTM D 828-93.

The thickness and basis weight of laminates of present invention were determined by measuring the thickness and the weight of an area of a sample of the test laminates in accordance with ASTM D 374-99 and ASTM D 646-96, respectively.

Initial tear strength (ITS) of laminates was measured based on ASTM D1004-07 at a grip distance of 7.6 cm.

Bond strength or ply adhesion between the film and the nonwoven sheet was measured based on ASTM F904-98 on strips 2.54 cm wide at speed of 12.7 cm/min.

Stiffness to bend for laminate was measured based on ASTM D747 with determination of Olsen Stiffness Index (OSI) by bending of a strip of the laminate 2.54 cm wide to 60 degrees bending angle and calculating the Index as:
OSI = (A/100 x B)/(0.125 D)
Where A = Mean uppers scale reading when lower scale = 60;
B = total torque, in-lb.;
D = specimen width - inches.

Normalized Stiffness Index (NSI) was defined as Olsen Stiffness Index divided by laminate thickness in the third degree:
NSI = OSI/(TH^3)
Where TH = specimen thickness in mm.

Coefficient of friction of the laminate surface was measured in accordance with ASTM D-1894 using Instron Coefficient of Friction Fixture with the polished stainless steel friction table with the maximum roughness depth of 37 microinches (0.9 micrometers).

Breakdown voltage of laminates was measured in accordance with ASTM D149-97a, Method A (short time test) using flat 51 mm diameter and 25 mm thick electrodes with edges rounded to 6.4 mm.

### Example

In the process of the refurbishing of electrical motor, its stator comprising slot liners and wedges is made from the laminate of PET film and spunbonded nonwoven with the sheath/core structure of filaments (sheath is modified di-methyl isophthalate PET copolymer with melting point of 216 C and the core is PET), is heated to 160 C in the oven and, after that, the wiring is pulled out of the stator together with parts of the slot liners and wedges. Then, the stator is heated in the oven at 380 C for 1.5 hours, and all residue organic components are burned out without any overheating or damage of the core.

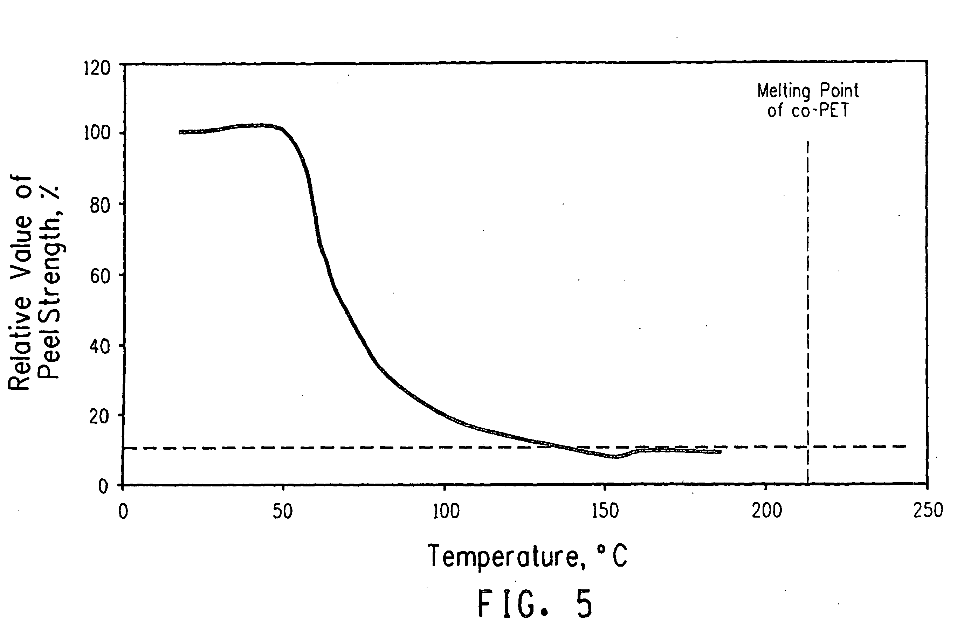

As shown in Figure 5, the peel strength between the film and the nonwoven sheet decreases with increasing temperature, and decreases significantly prior to reaching the melt point. Therefore the stator can be heated to a softening temperature to weaken the peel strength and the conductors removed.

## Claims

1. A process for refurbishing an electrical motor or generator having an electrical winding support, a laminate electrical insulation part, an electrical conductor, and a encapsulating resin, comprising the steps of:
a) heating the motor or generator to soften the laminate electrical insulation part such that the part will delaminate when a stress is applied;
b) applying a stress to the heated laminate electrical insulation part by pulling or stripping the electrical conductor from the motor or generator, thereby delaminating the electrical insulation part and removing the electrical conductor along with a portion of the electrical insulation part; and
c) further heating the motor or generator to thermally decompose both the encapsulating resin and the remaining electrical insulation part material present on the electrical winding support;
wherein the laminate electrical insulation part comprises a thermoplastic film and at least one fibrous sheet,
the film being attached to the fibrous sheet by thermal bonding of a thermoplastic polymer that is either one of the components of the fibrous sheet or on the surface of the film,
wherein the thermoplastic polymer is the lowest melting polymer and has a melting point at least 15 degrees Celsius lower than both the melting point of any other polymer component in the fibrous sheet and the melting point of the thermoplastic film,
the electrical insulation part having a breakdown voltage of at least 3 kilovolts, and a surface having a dynamic frictional coefficient of 0.25 or less.

2. The process of claim 1 wherein, the fibrous sheet is a nonwoven sheet.

3. The process of claim 1 wherein, the laminate electrical insulation part comprises:
a thermoplastic film positioned between, adjacent to, and attached to two nonwoven sheets, each of the nonwoven sheets comprising multicomponent polymeric fibers made from a plurality of polymers,
the plurality of polymers including at least a first polymer and a second polymer, the first polymer being the lowest melting point polymer and having a melting point that is at least 15 degrees Celsius lower than both the melting point of any other polymer in the nonwoven sheets and the melting point of the thermoplastic film,
the thermoplastic film being attached to the nonwoven sheets by the first polymer in the nonwoven sheets.

## Patentansprüche

1. Verfahren zur Überholung eines Elektromotors oder Generators mit einem elektrischen Wicklungsträger, einem elektrischen Isolierteil aus Laminat, einem elektrischen Leiter und einer Harzvergussmasse, wobei das Verfahren die folgenden Schritte aufweist:
a) Erhitzen des Motors oder Generators, um das elektrische Isolierteil aus Laminat so zu erweichen, dass sich das Teil bei Anlegen einer mechanischen Spannung ablöst;
b) Anlegen einer mechanischen Spannung an das erhitzte elektrische Isolierteil aus Laminat durch Abziehen oder Ablösen des elektrischen Leiters von dem Motor oder Generator, wodurch das elektrische Isolierteil delaminiert und der elektrische Leiter zusammen mit einem Teil des elektrischen Isolierteils entfernt wird; und
c) weiteres Erhitzen des Motors oder Generators, um sowohl die Harzvergussmasse als auch das auf dem elektrischen Wicklungsträger vorhandene restliche Material des elektrischen Isolierteils thermisch zu zersetzen;
wobei das elektrische Isolierteil aus Laminat einen thermoplastischen Film und mindestens eine Faserbahn aufweist,
wobei der Film durch Thermobindung eines thermoplastischen Polymers, das entweder eine der Komponenten der Faserbahn ist oder sich auf der Oberfläche des Films befindet, an der Faserbahn fixiert wird,
wobei das thermoplastische Polymer das niedrigstschmelzende Polymer ist und einen Schmelzpunkt aufweist, der um mindestens 15°C niedriger ist als sowohl der Schmelzpunkt jeder anderen Polymerkomponente in der Faserbahn als auch der Schmelzpunkt des thermoplastischen Films,
wobei das elektrische Isolierteil eine Durchschlagspannung von mindestens 3 Kilovolt und eine Oberfläche mit einem dynamischen Reibungskoeffizienten von 0,25 oder weniger aufweist.

2. Verfahren nach Anspruch 1, wobei die Faserbahn ein Faservlies ist.

3. Verfahren nach Anspruch 1, wobei das Laminatteil zur elektrischen Isolierung aufweist:
einen thermoplastischen Film, der zwischen zwei Faservliesen, daran angrenzend und daran fixiert angeordnet ist, wobei jedes der Faservliese Polymer-Multikomponentenfasern aufweist, die aus einer Vielzahl von Polymeren bestehen,
wobei die Vielzahl von Polymeren mindestens ein erstes Polymer und ein zweites Polymer einschließt, wobei das erste Polymer das Polymer mit dem niedrigsten Schmelzpunkt ist und einen Schmelzpunkt aufweist, der um mindestens 15°C niedriger ist
als sowohl der Schmelzpunkt jedes anderen Polymers in den Faservliesen als auch der Schmelzpunkt des thermoplastischen Films;
wobei der thermoplastische Film durch das erste Polymer in den Faservliesen an den Faservliesen fixiert wird.

## Revendications

1. Procédé de remise en état d'un générateur ou moteur électrique comportant un support d'enroulement électrique, une pièce isolante électrique stratifiée, un conducteur électrique, et une résine d'encapsulation, comprenant les étapes consistant à:
a) chauffer le générateur ou le moteur pour ramollir la pièce isolante électrique stratifiée de façon que la pièce se décolle lors de l'application d'une contrainte;
b) appliquer une contrainte sur la pièce isolante électrique stratifiée chauffée, en tirant sur ou en dénudant le conducteur électrique du générateur ou du moteur, ce qui décolle ainsi la pièce isolante électrique et enlève le conducteur électrique en même temps qu'une partie de la pièce isolante électrique; et
c) chauffer encore le générateur ou le moteur pour décomposer thermiquement à la fois la résine d'encapsulation et le matériau du reste de la pièce isolante électrique présent sur le support d'enroulement électrique;
dans lequel la pièce isolante électrique stratifiée comprend un film thermoplastique et au moins une feuille fibreuse,
le film étant attaché à la feuille fibreuse par adhérence thermique d'un polymère thermoplastique qui est soit un des composants de la feuille fibreuse soit présent sur la surface du film,
le polymère thermoplastique étant le polymère fondant à la température la plus basse, ayant un point de fusion inférieur d'au moins 15 degrés Celsius à la fois au point de fusion de tout autre composant polymère de la feuille fibreuse et au point de fusion du film thermoplastique,
la pièce isolante électrique ayant une tension de claquage d'au moins 3 kilovolts, et une surface présentant un coefficient de frottement dynamique inférieur ou égal à 0,25.

2. Procédé selon la revendication 1 dans lequel la feuille fibreuse est une feuille non tissée.

3. Procédé selon la revendication 1 dans lequel la pièce isolante électrique stratifiée comprend:
un film thermoplastique placé entre, à proximité de, et attaché à deux feuilles non tissées, chacune des feuilles non tissées comprenant des fibres polymères à multicomposants fabriquées à partir d'une pluralité de polymères,
la pluralité de polymères incluant au moins un premier polymère et un second polymère, le premier polymère étant le polymère ayant le point de fusion le plus bas et ayant un point de fusion inférieur d'au moins 15 degrés Celsius à la fois au point de fusion de tout autre polymère des feuilles non tissées et au point de fusion du film thermoplastique,
le film thermoplastique étant attaché aux feuilles non tissées par le premier polymère dans les feuilles non tissées.
